(19) **Europäisches Patentamt / European Patent Office / Office européen des brevets**

(11) **EP 4 593 332 A1**

(12) **EUROPEAN PATENT APPLICATION**
published in accordance with Art. 153(4) EPC

(43) Date of publication:
30.07.2025 Bulletin 2025/31

(21) Application number: 23870171.8

(22) Date of filing: 04.09.2023

(51) International Patent Classification (IPC):
**H04L 25/02** (2006.01)

(52) Cooperative Patent Classification (CPC):
**H04L 1/00; H04L 25/02**

(86) International application number:
**PCT/CN2023/116696**

(87) International publication number:
**WO 2024/066931 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 27.09.2022 CN 202211187621

(71) Applicant: Sanechips Technology Co., Ltd.
Shenzhen, Guangdong 518055 (CN)

(72) Inventors:
• ZHAO, Lijuan
  Shenzhen, Guangdong 518055 (CN)
• XIA, Zijie
  Shenzhen, Guangdong 518055 (CN)
• YU, Han
  Shenzhen, Guangdong 518055 (CN)

(74) Representative: **Canzler & Bergmeier
Patentanwälte
Partnerschaft mbB
Despag-Straße 6
85055 Ingolstadt (DE)**

(54) **SIGNAL SCRAMBLING METHOD AND APPARATUS, TERMINAL, AND COMPUTER-READABLE STORAGE MEDIUM**

(57) Embodiments of the present application relate to the technical field of wireless access. Disclosed are a signal scrambling method and apparatus, a terminal, and a computer-readable storage medium. The signal scrambling method comprises: generating a mask scrambling sequence according to a preset synchronization signal period and a specified system frame number index; unmasking a log likelihood ratio sequence on the basis of the mask scrambling sequence to obtain an unmasked scrambling sequence; and generating a combined scrambling sequence on the basis of the unmasked scrambling sequence to perform physical broadcast channel information blind detection. According to the present application, in a blind detection process, a signal is scrambled prior to entering a decoder, thereby ensuring that a decoded all-zero signal is necessarily illegitimate and thus reducing the false detection rate of all-zero verification, and also ensuring that a decoding result is not all-zero when an original MIB signal is all-zero and thus reducing the missing detection ratio. The missing detection problem when MIB original information is all-zero and the false detection problem under a low signal-to-noise ratio are solved.

Generate a mask scrambling sequence according to a preset synchronization signal period and a specified system frame number index — S10

Unmask a log-likelihood ratio sequence based on the mask scrambling sequence to obtain an unmasked scrambling sequence — S20

Generate a combined scrambling sequence based on the unmasked scrambling sequence to perform physical broadcast channel information blind detection — S30

FIG. 2

EP 4 593 332 A1

## Description

### CROSS-REFERENCE TO RELATED APPLICATIONS

This application claims the priority of Chinese patent application No. 202211187621.6 filed on September 27, 2022, the entirety of which is incorporated hereby by reference.

### TECHNICAL FIELD

The present application relates to the technical field of wireless access, and particularly relates to a signal scrambling method and apparatus, a terminal, and a computer-readable storage medium.

### BACKGROUND

Before accessing a cell, a user equipment (UE, terminal) needs to acquire a master information block (MIB) of the cell by detecting a physical broadcast channel (PBCH), so as to understand how the cell is configured and thereby properly operate in the cell. In the 5th generation mobile communication technology (5G) new radio (NR) system, a PBCH payload is mapped to a synchronization signal/PBCH block (SSB) for transmission after being subjected to processes such as interleaving, scrambling, and check. By performing blind detection on the PBCH information, the UE obtains an MIB, an SSB index and other types of information, which enables the UE to further accomplish radio frame timing, half-frame timing and slot timing.

During the blind detection of the PBCH, there may be a case where a decoding result of a decoder includes all-zero MIB information, which means that access to the cell is barred. The reason may be that the original MIB information is all zeros, or the MIB information is falsely detected to be all zeros due to poor signal quality under a low signal-to-noise ratio condition. In related technologies, since there is no method for determining the specific reason and in order to reduce the false detection rate, the decoder's output of all zeros is deemed illegal, leading to miss detection when the original MIB information is all zeros. If the all-zero MIB information is correctly detected by the UE, the UE will not try to access the cell for a long time; but if the all-zero MIB information is missed by the UE, the UE will repeatedly try to access the cell, making it hard to access the cell and causing high equipment power consumption and other disadvantages.

### SUMMARY

An embodiment of the present application provides a signal scrambling method, including: generating a mask scrambling sequence according to a preset synchronization signal period and a specified system frame number index; unmasking a log-likelihood ratio sequence based on the mask scrambling sequence to obtain an unmasked scrambling sequence; and generating a combined scrambling sequence based on the unmasked scrambling sequence to perform physical broadcast channel information blind detection.

An embodiment of the present application further provides a signal scrambling apparatus, including: a mask sequence generation module configured to generate a mask scrambling sequence according to a preset synchronization signal period and a specified system frame number index; an unmasking module configured to unmask a log-likelihood ratio sequence based on the mask scrambling sequence to obtain an unmasked scrambling sequence; and a combining module configured to generate a combined scrambling sequence based on the unmasked scrambling sequence to perform physical broadcast channel information blind detection.

An embodiment of the present application further provides a terminal, including: a memory, a processor, and a computer program stored on the memory and executable by the processor, wherein the computer program, when executed by the processor, causes the signal scrambling method described above to be implemented.

An embodiment of the present application further provides a computer-readable storage medium having a computer program stored thereon which, when executed by a processor, causes the signal scrambling method described above to be implemented.

### BRIEF DESCRIPTION OF DRAWINGS

To illustrate the technical solutions in the embodiments of the present application or the existing art more clearly, the drawings to be used in description of the embodiments or the existing art will be briefly described below. Apparently, the drawings in the following description merely show some embodiments of the present application, and other drawings may be derived from these drawings by those of ordinary skill in the art without any creative labor.

FIG. 1 is a schematic diagram of 5G NR PBCH coding and modulation mapping according to an embodiment of the present application;
FIG. 2 is a schematic flowchart of a signal scrambling method according to an embodiment of the present application;
FIG. 3 is a schematic diagram showing a process of generating an SFN-based mask scrambling sequence in a signal scrambling method according to an embodiment of the present application;
FIG. 4 is a schematic structural diagram of a signal scrambling apparatus according to an embodiment of the present application; and
FIG. 5 is a schematic diagram of a hardware structure of a terminal according to an embodiment of the present application.

DETAIL DESCRIPTION OF EMBODIMENTS

In the following description, for purposes of explanation and not limitation, specific details, such as particular system structures, techniques, and the like, are set forth to provide a thorough understanding of the embodiments of the present application. However, it will be apparent to those skilled in the art that the embodiments of the present application may be practiced in other embodiments without these specific details. In other instances, detailed descriptions of well-known systems, devices, circuits, and methods are omitted so as not to obscure the description of the embodiments of the present application by unnecessary details.

It should be noted that, although a logical order is illustrated in the flowcharts, in some cases, the operations illustrated or described may be performed in an order different from that in the flowcharts. The terms "first", "second", and the like in the description, the claims and the drawings are used for the purpose of distinguishing similar objects and are not necessarily used for indicating a specific order or sequence.

It should also be understood that reference throughout the specification to "one embodiment" or "some embodiments", or the like, means that a particular feature, structure, or characteristic described in connection with the embodiment is included in one or more embodiments of the present application. Thus, appearances of the phrases "in one embodiment", "in some embodiments", "in other embodiments", "in some other embodiments", or the like, in various places throughout this specification are not necessarily all referring to the same embodiment, but rather mean "one or more but not all embodiments" unless specifically stated otherwise. The terms "comprise", "include", "have" and variations thereof mean "including, but not limited to", unless otherwise specifically stated.

As described above, in the 5G NR system, before accessing a cell, the UE needs to acquire the MIB of the cell first, so as to understand how the cell is configured and thereby properly operate in the cell. The cell sends system information to all UEs within the cell through a logic channel, i.e., a broadcast control channel (BCCH), which is mapped to a transmission channel, i.e., broadcast channel (BCH), and a downlink shared channel (DL-SCH). The BCH is merely used to transmit the MIB information and is mapped to a physical broadcast channel (PBCH), while the DL-SCH is used to transmit various types of system information block (SIB) information and is mapped to a physical downlink shared channel (PDSCH).

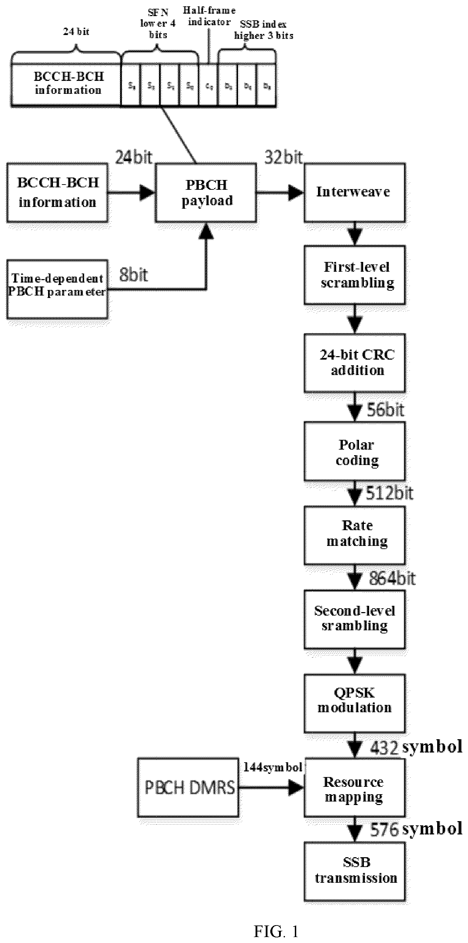

FIG. 1 is a schematic diagram of 5G NR PBCH coding and modulation mapping. As shown in FIG. 1, a PBCH payload is a 32-bit signal composed of 24-bit BCCH-BCH information and an 8-bit time-dependent PBCH parameter, and the 8-bit time-dependent PBCH parameter is further composed of lower 4 bits of system frame number (SFN) $(s_3, s_2, s_1, s_0)$, a half-frame indicator $c_0$, and higher 3 bits of SSB index $(b_2, b_1, b_0)$. The PBCH payload is subjected to interleaving, first-level scrambling (or first scrambling), and 24-bit cyclic redundancy check (CRC) addition to obtain a 56-bit signal, which is then converted into a 512-bit signal through Polar coding, and converted into an 864-bit signal through rate matching, and then the signal is subjected to a second-level scrambling (or second scrambling) and converted into a 432-symbol signal through QPSK modulation. The 432-symbol signal is subjected to resource mapping together with a 144-symbol demodulation reference signal (DMRS) to obtain a 576-symbol signal, which is then transmitted through the SSBs. Each SSB includes a primary synchronization signal, a secondary synchronization signal, a PBCH, and a DMRS corresponding to the PBCH, and corresponds to one beam direction. In each beam direction, the base station transmits a plurality of SSBs within a synchronization signal period in a beam polling mode, while the plurality of SSBs within the synchronization signal period are located in a half radio frame and form an SSB set, and beam directions of the respective SSBs cover the entire cell. By detecting the primary synchronization signal and the secondary synchronization signal, the UE can determine a physical cell identity and a symbol boundary of the SSB aligned with the UE beam, and on this basis, can perform blind detection on the PBCH information. The UE can obtain the MIB, the SFN information, the half-frame indicator and the SSB index by detecting the PBCH, thereby completing radio frame timing and half-frame timing. In addition, according to the SSB index and according to a pattern of the SSB set used by a current frequency band, the UE can determine the slot and symbol where a current synchronization signal is located, thereby completing slot timing.

One PBCH transmission time interval (TTI) is 80ms, within which the same transport block is transmitted in the synchronization signal period. The synchronization signal period may be 5 milliseconds (ms), 10ms, 20ms, 40ms, etc. Accordingly, one TTI may include 16, 8, 4 or 2 synchronization signal periods. To adapt to the high-frequency multi-beam NR system, one SSB set may include at most Lmax SSBs, where Lmax is related to a size of a carrier frequency. When the carrier frequency is lower than 3GHz, one SSB set includes 4 SSBs (Lmax=4); when the carrier frequency is higher than 3GHz and lower than 6GHz, one SSB set includes 8 SSBs (Lmax=8); and when the carrier frequency is higher than 6GHz, one SSB set includes 64 SSBs (Lmax=64). Each SSB is composed of 4 orthogonal frequency division multiplexing (OFDM) symbols, and each SSB includes one part of PBCH. Therefore, one TTI may include 16*Lmax, 8*Lmax, 4*Lmax equal parts of PBCH.

To improve the efficiency of PBCH blind detection, a technical solution has been proposed, in which information received in multiple synchronization signal periods by an SSB aligned with the current UE beam in one PBCH TTI is unmasked (de-masked) based on SFN and then soft combined; then the obtained result is Polar-encoded and then subjected to CRC and a second check; the PBCH detection is considered successful only when the two checks are both passed; and after the Polar decoding result indicating successful PBCH detection is complemented, an MIB message is extracted therefrom to complete the PBCH blind detection. According to this technical solution, the log-likelihood ratio (LLR) obtained by demodulating the SSB aligned with the UE beam is unmasked and then combined, so that the signal-to-noise ratio of PBCH demodulation is improved. Meanwhile, this technical solution only needs to traverse 8 SSB indexes and at most 16 SFN combinations under each SSB, resulting in only 128 blind detection combinations at most, which reduces the number of blind detection combinations and the complexity of PBCH demodulation compared with the conventional technology. Further, due to the unmasking operation, this technical solution requires a second check on the decoding result besides CRC, and the PBCH detection is considered successful only when the two checks are both passed, thereby reducing the false detection probability of PBCH.

However, according to this technical solution, the first-level scrambling code is descrambled when the SFN-based unmasking is performed on the received signal, so that the LLR combined sequence entering the decoder is a signal without scrambling. When the original MIB information is all zeros, the decoder outputs an all-zero result, which will naturally pass CRC and cause reporting of successful PBCH detection. However, under a low signal-to-noise ratio, the decoder cannot select an effective path due to poor signal quality, which may also lead to an all-zero decoding result. Since there is no means or method yet for determining whether the result of all zeros decoded by the decoder is caused by all-zero original MIB information or by false detection due to poor signal quality, the case where the decoder outputs an all-zero result will be determined as illegal to reduce the false detection rate, which may cause miss detection when the original MIB information is all zeros. An all-zero MIB message means that access to the cell is barred. If the all-zero MIB message is correctly detected by the UE, the UE will not try to access the cell for a long time; and if the all-zero MIB message is missed by the UE, the UE will repeatedly try the cell, making it hard to access the cell and causing high power consumption or other kinds of poor user experience. Therefore, solving this problem will effectively enhance the competitiveness of products.

In view of this, an embodiment of the present application provides a signal scrambling method, in which a signal is scrambled before entering a decoder in the blind detection process, thereby ensuring that any signal before entering the decoder is scrambled. As a result, the decoder will not output an all-zero result even when the MIB information is all zeros, which will not affect the detection when the MIB information is all zeros or affect the all-zero check of the decoder; beside, once the decoding result shows that the MIB information is all zeros, it is bound to be illegal, thereby reducing the false detection rate of all-zero check, while ensuring that the decoding result is not all-zero when the original MIB signal is all zeros and thus reducing the miss detection rate. Therefore, the miss detection problem when the MIB original information is all zeros and the false detection problem under a low signal-to-noise ratio are both solved.

The signal scrambling method, apparatus, device and computer-readable storage medium provided in the embodiments of the present application will be specifically described in the following embodiments.

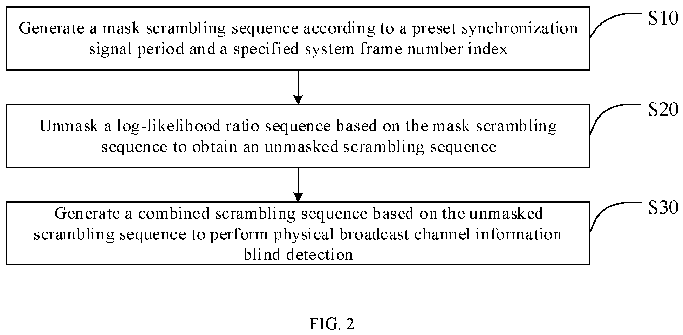

Referring to FIG. 2, a schematic flowchart of a signal scrambling method according to an embodiment of the present application is shown. The signal scrambling method may be applied to a terminal, and as shown in FIG. 2, the signal scrambling method provided in this embodiment includes the following operations S10 to S30.

At operation S10, generating a mask scrambling sequence according to a preset synchronization signal period and a specified system frame number index.

It will be understood that before an LLR sequence is unmasked, it is necessary to first generate a mask sequence. In the above technical solution, the first-level scrambling code will be completely removed when the LLR sequence is unmasked using the SFN-based mask sequence, so that the LLR combined sequence entering the decoder is a signal without any scrambling. Therefore, to provide the LLR combined sequence as a scrambled signal, the unmasked LLR sequence should also be a scrambled signal. Therefore, in generation of the mask sequence, in addition to adding the original first-level scrambling code for removal in the LLR sequence, a further first-level scrambling is added to the mask sequence based on a specified SFN index, so that unmasked LLR sequences of different synchronization signal periods in one PBCH transmission time interval have the same first-level scrambling code, thereby avoiding affecting subsequent soft combining.

At operation S20, unmasking a log-likelihood ratio sequence based on the mask scrambling sequence to obtain an unmasked scrambling sequence.

It will be understood that after the mask scrambling sequence is generated, by unmasking the LLR sequence through the mask scrambling sequence, the original first-level scrambling code in the LLR sequence can be removed, and a new first-level scrambling code selected based on the specified SFN index can be added to the LLR sequence, so that all LLR sequences in different synchronization signal periods are LLR scrambling sequences subjected to first-level scrambling.

At operation S30, generating a combined scrambling sequence based on the unmasked scrambling sequence to perform physical broadcast channel (PBCH) information blind detection.

In this embodiment, on the basis of performing soft combining on the unmasked scrambling sequence of the SSB aligned with the beam direction of the UE in one PBCH TTI, the combined scrambling sequence entering a Polar decoder contains a first-level scrambling code corresponding to the specified SFN index, and since the Polar decoder is linear, the result of Polar decoding also contains the first-level scrambling code corresponding to the specified SFN index. Therefore, it is possible to use the first-level scrambling code corresponding to the specified SFN index to perform first-level descrambling on decoding result which is not-all-zero and passes the CRC to obtain a new decoding result. Then, it is judged whether the PBCH detection is successful by judging whether the bits corresponding to the mask index $(k3,k2,k1,k0)$ are all zeros in the second check. Then, for decoding result indicating successful detection, the MIB information is complemented and extracted to complete blind detection of the PBCH information.

It should be noted that the combined scrambling sequence may be obtained by combining multiple sets of unmasked sequences, or formed by one set of unmasked sequences. For example, a first set of unmasked sequences obtained in a first synchronization signal period of one TTI may be directly used as the combined sequence. In an initial synchronization process, the UE does not know which SSB is aligned with the beam direction of the UE, i.e., does not know the index of the SSB aligned with the beam direction of the UE, and therefore, indexes of the SSBs are traversed and each SSB is unmasked, decoded and checked until the check is successful, so that the SSB is determined.

The signal scrambling method provided in this embodiment is an improvement of the mask sequence generation operation in the above technical solution. Considering that soft combining of LLRs of different synchronization signal periods is to be performed in the PBCH TTI, the unmasked LLR sequences of different synchronization signal periods should have the same first-level scrambling code. thus the LLR sequences of different synchronization signal periods are all subjected to the same first-level scrambling. Thereofre, it is ensured that the LLR sequences unmasked using the mask scrambling sequence still have the first-level scrambling code corresponding to the specified SFN index, and the LLR sequences of different synchronization signal periods all become LLR scrambling sequences; and then after Polar decoding, the decoding result that passes CRC is descrambled using the scrambling code. This embodiment solves the problem of miss detection when the MIB information is all zeros without adding any new operation or step, while still reserving the all-zero check function of the decoder, thereby reducing the probability of miss detection and false detection, facilitating quick iteration of products and effectively improving the competitiveness of products.

In some embodiments, the operation S10 may include, but is not limited to, the following operations S11 to S13.

At operation S11, generating a mask original sequence according to a preset synchronization signal period.

At operation S12, determining whether a mask index of the mask original sequence is a specified system frame number index.

At operation S13, in response to determining in operation S12 that the mask index of the mask original sequence is not the specified system frame number index, performing, according to the mask index and the specified system frame number index, first-level scrambling, cyclic redundancy check code addition and Polar coding on the mask original sequence, to obtain the mask scrambling sequence.

In some embodiments, the operation S11 may include, but is not limited to, the following operation S110: selecting, according to the preset synchronization signal period, bits and a half-frame indicator in a system frame number as a mask index to generate the mask original sequence.

For convenience of description, in this embodiment, 10 bits of information of the SFN are recorded from high to low as $(s_9,...,s_0)$, and 1 bit of information of the half-frame indicator is denoted as $c_0$, and in this embodiment, an SFN-based mask sequence is generated according to a preset synchronization signal period. When the synchronization signal period is 5ms, the SFN lower 3 bits and the half-frame indicator of different periods are different in the MIB information in the same SSB in the PBCH TTI, denoted as $(k3,k2,k1,k0)=(s2,s1,s0,c0)$; when the synchronization signal period is 10ms, the SFN lower 3 bits of different periods are different in the MIB information in the same SSB in the PBCH TTI, denoted as $(k3,k2,k1,k0)=(s2,s1,s0,0)$; when the synchronization signal period is 20ms, only the second and third bits of the SFN least significant bit (LSB) of different periods are different in the MIB information in the same SSB in the PBCH TTI, denoted as $(k3,k2,k1,k0)=(s2,s1,0,0)$; when the synchronization signal period is 40ms, only the third bit of the SFN LSB of different transmission periods are different in the MIB information in the same SSB in the PBCH TTI, denoted as $(k3,k2,k1,k0)=(s2,0,0,0)$; and when the synchronization signal period is 80ms or 160ms, combination cannot be performed and there is no need to generate a mask sequence. In the initial state, $(k3,k2,k1,k0)=(0,0,0,0)$.

In some embodiments, the operation S13 of performing, according to the mask index and the specified system frame number index, first-level scrambling on the mask original sequence may include, but is not limited to, the following operations A and B.

At operation A, selecting, according to a specified bit in the mask index, a corresponding first-level scrambling code to perform first-level scrambling on the mask original sequence to obtain a mask first sequence.

At operation B, selecting, according to a specified bit in the specified system frame number index, a corresponding first-level scrambling code to perform first-level scrambling on the mask first sequence.

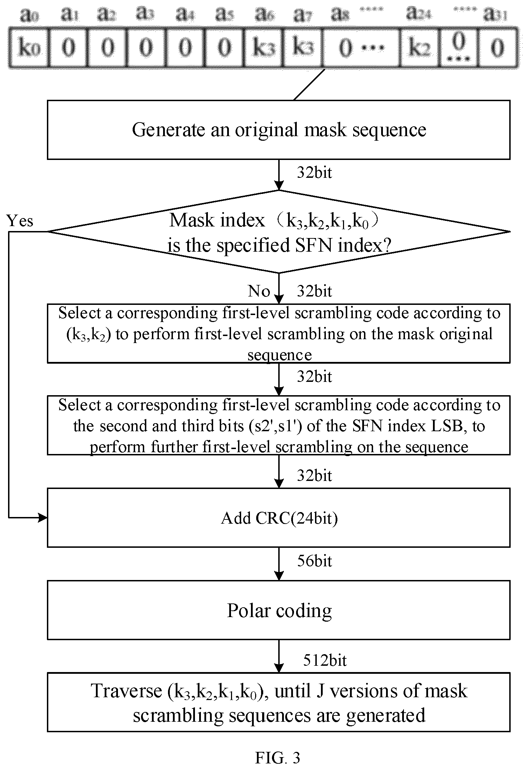

This embodiment may be understood in conjunction with FIG. 3. FIG. 3 is a schematic flowchart of a method for generating an SFN-based mask scrambling sequence according to an embodiment of the present application. As shown in FIG. 3, the mask original sequence has the following mapping relationship with the specified bits: a0=k0, a6=k3, a7=k1, a24=k2, while the rest bits of the mask original sequence are set to 0; it is judged whether the mask index (k3,k2,k1,k0) is the specified SFN index; if the mask index (k3,k2,k1,k0) is not the specified SFN index, a corresponding first-level scrambling code is selected according to specified bits (e.g., (k3,k2)) in the mask sequence to perform first-level scrambling on the mask original sequence a0,a1,...,a31; then, according to specified bits in the specified SFN index (e.g., according to the second and third bits (s2',s1') of LSB when the synchronization signal period is 20ms), a corresponding first-level scrambling code is selected to perform a further first-level scrambling on the sequence; and CRC is added to the bit sequence subjected to the first-level scrambling twice, and then the sequence is subjected to Polar coding to generate a mask scrambling sequence.

In some embodiments, after the operation S12, the signal scrambling method may further include, but is not limited to, the following operation S14: in response to determining in operation S12 that the mask index of the mask original sequence is the specified system frame number index, performing cyclic redundancy check code addition and Polar coding on the mask original sequence, to obtain the mask scrambling sequence.

It will be understood that if the mask index of the mask original sequence is the specified SFN index, the mask scrambling sequence may be generated by directly adding CRC to, and then performing Polar coding on, the mask original sequence.

In some embodiments, after the operation S13 or S14, the signal scrambling method may further include, but is not limited to, the following operation: traversing the mask index, and if the mask index is not completely traversed, performing the operation of generating the mask original sequence according to the preset synchronization signal period until J sets of mask scrambling sequences are generated, where J is the number of synchronization signal periods within a transmission time interval of a physical broadcast channel.

It will be understood that J=PBCH TTI/synchronization signal period. In this embodiment, taking a synchronization signal period of 20ms as an example, four cases are obtained by traversing values of (k3,k2,k1,k0), and J=4 sets of mask sequences can be generated, where the mask scrambling sequence has a length N =

$$d_j = d_0^j, d_1^j, ..., d_{N-1}^j$$

512, and is denoted as                              , where N=512, and j=0:J-1.

In some embodiments, the operation S20 may include, but is not limited to, the following operation S21: performing XOR operation on the log-likelihood ratio sequence with the sets of mask scrambling sequences respectively, to obtain J sets of unmasked scrambling sequences.

In this embodiment, to combine LLR sequences of different synchronization signal periods in one TTI, the LLR sequences are reversed to eliminate the influence of SFN information differences, and L sets of LLR sequences are unmasked using the generated J sets of SFN-based mask sequences, where for an $n^{th}$ (where n is 1:J) synchronization signal period, the unmasking process may be represented as:

$$r_i^{l,j} = r_i^l \times \left(1 - 2 \times d_i^{(n-1+j)\%J}\right)$$

, where $i$=0:N-1, $l$= 0:L-1, and $j$=0:J-1, thereby obtaining L*J sets of unmasked scrambling sequences.

Illustratively, the 5G NR system supported by this embodiment has a PBCH TTI of 80ms, a synchronization signal period of 20ms, and at most J=4 combinations can be performed within one PBCH TTI, which means that 4 versions of mask sequences are to be generated, and the specified SFN index is 0. The synchronization signal period is 20ms; in MIB information of the same SSB at different periods, only the second and third bits (denoted as (s2,s1)) of the SFN LSB are different, and for (k3,k2,k1,k0)=(s2,s1,0,0) in the 32-bit mask original sequence, 4 values may be set: 00,01,10,11, and the corresponding mask sequence index is denoted as j=0:3, and initially, j=0. The operations are as follows:

1) generating a 32-bit mask original sequence using (k3,k2,k1,k0) corresponding to j, and entering operation 2);

2) if the mask sequence index is equal to the specified SFN index, entering operation 5) without adding any scrambling code; if the mask sequence index is not equal to the specified SFN index, entering operation 3);

3) performing first-level scrambling on the mask original sequence with a first-level scrambling code (32-bit) corresponding to (s2,s1)=(k3,k2) to generate a 32-bit sequence, and entering operation 4);

4) performing first-level scrambling on the sequence generated in operation 3) by module 204 with a first-level scrambling code (32-bit) corresponding to (s2, s1)=(0,0) to generate a 32-bit sequence, and entering operation 5);

5) performing 24-bit CRC addition by module 205 to generate a 56-bit sequence, where if the mask sequence index is equal to the specified SFN index, adopting the mask original sequence generated in operation 1); and if the mask sequence index is not equal to the specified SFN index, adopting the sequence generated in operation 4) and entering operation 6);

6) performing Polar coding on the 56-bit sequence generated in operation 5) by module 206 to generate a 512-bit mask scrambling sequence dj; and

7) setting j=j+1, and if j<J, entering operation 1); otherwise, exiting the process.

It can be seen from operation 4) that the mask sequence $d_j$(j=0:3) includes 4 mask sequences each having a first-level scrambling code corresponding to the specified SFN index 0. When the system uses the mask sequence $d_j$(j=0:3) for unmasking, it first reverses and eliminates the second and third bits of the SFN LSB of different periods in one PBCH TTI, and eliminates the first-level scrambling codes corresponding to different periods, while the first-level scrambling code corresponding to the specified SFN index is reserved for each period, so that LLRs of multiple periods in one PBCH TTI can be combined, and the signal-to-noise ratio is improved; besides, since each sequence entering the Polar decoder includes the first-level scrambling code corresponding to the specified SFN index, if the MIB original sequence is all zeros, the decoding result is not all zeros due to the addition of the first-level scrambling code corresponding to the specified SFN index, and when the Polar decoder outputs an all-zero result, the all-zero check may be determined as illegal, thereby reducing the probability of miss detection and false detection, improving the PBCH detection performance, and enhancing the user experience.

It should be noted that the above improvement on the mask sequence generation method only has an influence on the scenes with synchronization signal periods of 5ms, 10ms, 20ms, and 40ms. It can be known from the foregoing embodiments that since each sequence entering the Polar decoder includes the first-level scrambling code corresponding to the specified SFN index, and the Polar decoder is linear, the Polar decoding result also includes the first-level scrambling code corresponding to the specified SFN index, so that a not-all-zero decoding result that passes CRC is subjected to first-level descrambling with the first-level scrambling code corresponding to the specified SFN index to obtain a new decoding result. Then, it is judged whether the PBCH detection is successful by judging whether the bits corresponding to the mask index (k3,k2,k1,k0) are all zeros in the second check, and MIB information complementation and extraction are performed on the decoding result indicating successful detection.

In addition, to solve the miss detection problem when the MIB original information is all zeros and the false detection problem under a low signal-to-noise ratio, an embodiment of the present application further provides another signal scrambling method as an alternative, in which a first-level scrambling code corresponding to a specified SFN index is added to a signal after LLR combining and before Polar decoding, and after Polar decoding, the decoding result that passes CRC is descrambled with the scrambling code. According to this signal scrambling method, it is required to add a 512-bit first-level scrambling code generation module without modifying the mask sequence generation module, and use this first-level scrambling code generation module to perform first-level scrambling on the combined sequence after the LLR combining, which can also solve the miss detection problem when the MIB original information is all zeros and the false detection problem under a low signal-to-noise ratio.

In this embodiment, the signal scrambling method includes: selecting, according to the least significant bit in the specified system frame number index, a corresponding short-bit scrambling code; performing cyclic redundancy check code addition and Polar coding on the short-bit scrambling code to obtain a long-bit scrambling code; and performing first-level scrambling on a preset combined sequence with the long-bit scrambling code to obtain a combined scrambling sequence.

Illustratively, in this embodiment, when the LLR sequence is unmasked using the mask sequence, different SFN bits of different periods in one PBCH TTI are reversed and eliminated, and the first-level scrambling codes on different periods are also eliminated. Then LLR combining may be performed for different periods, and first-level scrambling is performed on the combined LLR with the first-level scrambling code corresponding to the specified SFN index. Since the combined LLR has 512 bits, and the first-level scrambling code corresponding to the specified SFN index has a length of 32 bits, it is necessary to add a 24-bit CRC to the 32-bit first-level scrambling code to generate a 56-bit sequence, and then generate a 512-bit first-level scrambling code after Polar coding. Then the combined LLR is subjected to first-level scrambling with the 512-bit first-level scrambling code before entering a Polar decoder. A not-all-zero decoding result that passes CRC after Polar decoding is subjected to first-level descrambling with the 32-bit first-level scrambling code corresponding to the specified SFN index to obtain a new decoding result. Then, it is judged whether the PBCH detection is successful by judging whether the bits corresponding to the mask index (k3,k2,k1,k0) are all zeros in the second check, and MIB information complementation and extraction are performed on the decoding result indicating successful detection.

In this alternative solution, it is required to add a 512-bit first-level scrambling code generation module, and it is required to add a first-level scrambling module after the LLR combining. By adding the two modules, the effects of reducing the probability of miss detection and false detection can be still achieved.

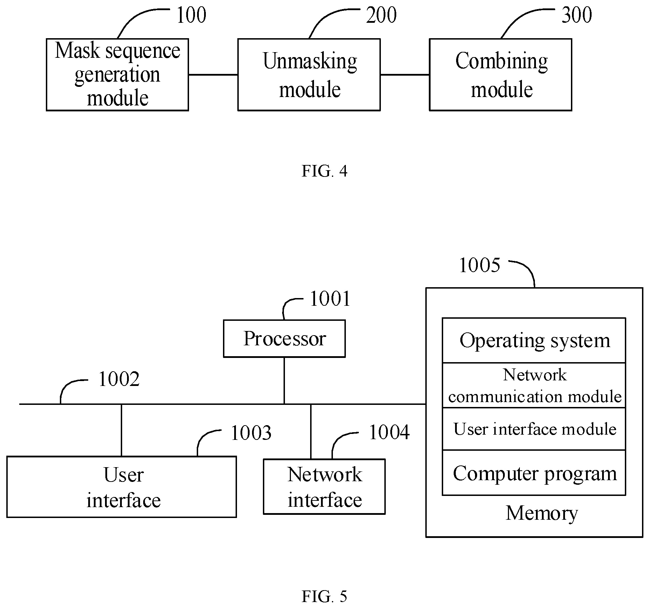

An embodiment of the present application further provides a signal scrambling apparatus. Referring to FIG. 4, a schematic structural diagram of a signal scrambling apparatus according to an embodiment of the present application is shown. As shown in FIG. 4, in this embodiment, the signal scrambling apparatus includes: a mask sequence generation module 100, an unmasking module 200, and a combining module 300.

The mask sequence generation module 100 is configured to generate a mask scrambling sequence according to a preset synchronization signal period and a specified system frame number index.

The unmasking module 200 is configured to unmask a log-likelihood ratio sequence based on the mask scrambling sequence to obtain an unmasked scrambling sequence.

The combining module 300 is configured to generate a combined scrambling sequence based on the unmasked scrambling sequence to perform physical broadcast channel information blind detection.

According to the signal scrambling apparatus of this embodiment, a signal is scrambled before entering a decoder in the blind detection process, so that any signal before entering the decoder is scrambled. As a result, a decoded all-zero signal is naturally illegal, which reduces the false detection rate of all-zero check, while it is ensured that the decoding result is not all-zero when the original MIB signal is all zeros, which reduces the miss detection rate. Therefore, the miss detection problem when the MIB original information is all zeros and the false detection problem under a low signal-to-noise ratio are both solved.

In some embodiments, the mask sequence generation module 100 includes: an original sequence generation module configured to generate a mask original sequence according to a preset synchronization signal period; a judgment module configured to judge whether a mask index of the mask original sequence is a specified system frame number index; and an execution module configured to, if the mask index of the mask original sequence is not the specified system frame number index, perform, according to the mask index and the specified system frame number index, first-level scrambling, cyclic redundancy check code addition and Polar coding on the mask original sequence, to obtain the mask scrambling sequence.

In some embodiments, the original sequence generation module is configured to: select, according to the preset synchronization signal period, bits and a half-frame indicator in a system frame number as a mask index to generate a mask original sequence.

In some embodiments, the execution module is configured to: select, code according to a specified bit in the mask index, a corresponding first-level scrambling to perform first-level scrambling on the mask original sequence to obtain a mask first sequence; and select, according to a specified bit in the specified system frame number index, a corresponding first-level scrambling code to perform first-level scrambling on the mask first sequence.

In some embodiments, the execution module is configured to: if the judgment module determines that the mask index of the mask original sequence is the specified system frame number index, perform cyclic redundancy check code addition and Polar coding on the mask original sequence, to obtain the mask scrambling sequence.

In some embodiments, the signal scrambling apparatus further includes: a traversing module configured to traverse the mask index, and if the mask index is not traversed, perform the operation of generating the mask original sequence according to the preset synchronization signal period until J sets of mask scrambling sequences are generated, where J is the number of synchronization signal periods within a transmission time interval of a physical broadcast channel.

In some embodiments, the unmasking module 200 is configured to: perform XOR operation on the log-likelihood ratio sequence with the sets of mask scrambling sequences respectively, to obtain J sets of unmasked scrambling sequences.

The signal scrambling apparatus provided in this embodiment and the signal scrambling method provided in the foregoing embodiments belong to the same inventive concept, the technical details that are not described in detail in this embodiment may refer to any of the foregoing embodiments, and this embodiment has the same beneficial effects as performing the signal scrambling method.

An embodiment of the present application further provides a terminal, where the signal scrambling method applied to a terminal may be executed by a signal scrambling apparatus which may be implemented by software and/or hardware and integrated in the terminal. The terminal may be a mobile phone, a laptop, a tablet, or any other mobile device which can communicate with the network side.

Referring to FIG. 5, a schematic diagram of a hardware structure of a terminal according to an embodiment of the present application is shown. As shown in FIG. 5, the terminal may include: a processor 1001, such as a central processing unit (CPU), a communication bus 1002, a user interface 1003, a network interface 1004, and a memory 1005. The communication bus 1002 is configured to enable connective communication among these components. The user interface 1003 may include a display, an input unit such as a keyboard, and optionally a standard wired or wireless interface. Optionally, the network interface 1004 may include a standard wired or wireless interface (e.g., a WIreless-FIdelity (WI-FI) interface). The memory 1005 may be a high-speed random access memory (RAM), or a non-volatile memory (NVM), such as a disk memory. Optionally, the memory 1005 may be a storage device separate from the processor 1001 described above.

It will be understood by those skilled in the art that the configuration shown in FIG. 5 is not intended to be limiting the terminal, and the terminal may include more or fewer components than shown, or a combination of some components, or a different arrangement of components. As shown in FIG. 5, the memory 1005, as a storage medium, may include an operating system, a data storage module, a network communication module, a user interface module, and a computer program. In the terminal shown in FIG. 5, the network interface 1004 is mainly configured for data communication with other devices; and the user interface 1003 is mainly configured for data interaction with a user. In this embodiment, the processor 1001 and the memory 1005 may be provided in the terminal, and the terminal calls the computer program stored on the memory 1005 through the processor 1001 to execute the signal scrambling method applied to the terminal according to any of the above embodiments.

The terminal proposed in this embodiment and the signal scrambling method applied to the terminal proposed in the above embodiments belong to the same inventive concept, the technical details that are not described in detail in this embodiment may refer to any of the foregoing embodiments, and this embodiment has the same beneficial effects as performing the signal scrambling method.

In addition, an embodiment of the present application further provides a computer-readable storage medium, which may be a non-volatile computer-readable storage medium, and the computer-readable storage medium has a computer program stored thereon which, when executed by a processor, causes the signal scrambling method according to any of the above embodiments to be implemented.

It will be understood by those of ordinary skill in the art that all or some operations of the above described method, and the system may be implemented as software, firmware, hardware, and suitable combinations thereof. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). The term computer storage medium includes volatile and nonvolatile, removable and non-removable media implemented in any method or technology for storage of information such as computer-readable instructions, data structures, program modules or other data, as is well known to those of ordinary skill in the art. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic storage device, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

While the preferred embodiments of the present application have been specifically described above, the embodiments of the present application are not limited to the above implementations, and various equivalent variations or replacements may be made by those skilled in the art without departing from the spirit of the embodiments of the present application. Such equivalent variations or replacements fall into the scope as defined in the claims and embodiments of the present application.

## Claims

1. A signal scrambling method, comprising:

   generating a mask scrambling sequence according to a preset synchronization signal period and a specified system frame number index; unmasking a log-likelihood ratio sequence based on the mask scrambling sequence to obtain an unmasked scrambling sequence; and generating a combined scrambling sequence based on the unmasked scrambling sequence to perform physical broadcast channel information blind detection.

2. The signal scrambling method according to claim 1, wherein generating the mask scrambling sequence according to the preset synchronization signal period and the specified system frame number index comprises:

   generating a mask original sequence according to a preset synchronization signal period; determining whether a mask index of the mask original sequence is a specified system frame number index; in response to determining that the mask index of the mask original sequence is not the specified system frame number index, performing, according to the mask index and the specified system frame number index, first-level scrambling, cyclic redundancy check code addition and Polar coding on the mask original sequence, to obtain the mask scrambling sequence.

3. The signal scrambling method according to claim 2, wherein generating the mask original sequence according to the preset synchronization signal period comprises:
   selecting, according to the preset synchronization signal period, bits and a half-frame indicator in a system frame number as a mask index to generate a mask original sequence.

4. The signal scrambling method according to claim 2, wherein performing, according to the mask index and the specified system frame number index, first-level scrambling on the mask original sequence comprises:

selecting, according to a specified bit in the mask index, a corresponding first-level scrambling code to perform first-level scrambling on the mask original sequence to obtain a mask first sequence; and

selecting, according to a specified bit in the specified system frame number index, a corresponding first-level scrambling code to perform first-level scrambling on the mask first sequence.

5. The signal scrambling method according to claim 2, wherein after determining whether the mask index is a specified system frame number index, the method further comprises:

in response to determining that the mask index is the specified system frame number index, performing cyclic redundancy check code addition and Polar coding on the mask original sequence, to obtain the mask scrambling sequence.

6. The signal scrambling method according to any one of claims 2 to 5, wherein after obtaining the mask scrambling sequence, the method further comprises:

traversing the mask index, and if the mask index is not completely traversed, performing the operation of generating the mask original sequence according to the preset synchronization signal period until J sets of mask scrambling sequences are generated, where J is the number of synchronization signal periods within a transmission time interval of a physical broadcast channel.

7. The signal scrambling method according to claim 6, wherein unmasking the log-likelihood ratio sequence based on the mask scrambling sequence to obtain the unmasked scrambling sequence comprises:

performing XOR operation on the log-likelihood ratio sequence with the sets of mask scrambling sequences respectively, to obtain J sets of unmasked scrambling sequences.

8. A signal scrambling apparatus, comprising:

a mask sequence generation module configured to generate a mask scrambling sequence according to a preset synchronization signal period and a specified system frame number index;

an unmasking module configured to unmask a log-likelihood ratio sequence based on the mask scrambling sequence to obtain an unmasked scrambling sequence; and

a combining module configured to generate a combined scrambling sequence based on the unmasked scrambling sequence to perform physical broadcast channel information blind detection.

9. A terminal, comprising: a memory, a processor, and a computer program stored on the memory and executable by the processor, wherein the computer program, when executed by the processor, causes the signal scrambling method according to any one of claims 1 to 7 to be implemented.

10. A computer-readable storage medium having a computer program stored thereon which, when executed by a processor, causes the signal scrambling method according to any one of claims 1 to 7 to be implemented.

FIG. 1

Generate a mask scrambling sequence according to a preset synchronization signal period and a specified system frame number index — S10

Unmask a log-likelihood ratio sequence based on the mask scrambling sequence to obtain an unmasked scrambling sequence — S20

Generate a combined scrambling sequence based on the unmasked scrambling sequence to perform physical broadcast channel information blind detection — S30

FIG. 2

| $a_0$ | $a_1$ | $a_2$ | $a_3$ | $a_4$ | $a_5$ | $a_6$ | $a_7$ | $a_8$ | **···** | $a_{24}$ | **···** | $a_{31}$ |
|---|---|---|---|---|---|---|---|---|---|---|---|---|
| $k_0$ | 0 | 0 | 0 | 0 | 0 | $k_3$ | $k_3$ | 0 | ··· | $k_2$ | 0 ··· | 0 |

Generate an original mask sequence

↓ 32bit

Yes ←

Mask index $(k_3,k_2,k_1,k_0)$ is the specified SFN index?

No ↓ 32bit

Select a corresponding first-level scrambling code according to $(k_3,k_2)$ to perform first-level scrambling on the mask original sequence

↓ 32bit

Select a corresponding first-level scrambling code according to the second and third bits (s2',s1') of the SFN index LSB, to perform further first-level scrambling on the sequence

↓ 32bit

Add CRC(24bit)

↓ 56bit

Polar coding

↓ 512bit

Traverse $(k_3,k_2,k_1,k_0)$, until J versions of mask scrambling sequences are generated

FIG. 3

100

200

300

| Mask sequence generation module | Unmasking module | Combining module |

FIG. 4

1005

1001

Processor

1002

1003    1004

| User interface | Network interface | | Operating system |
| | | | Network communication module |
| | | | User interface module |
| | | | Computer program |
| | | | Memory |

FIG. 5

## INTERNATIONAL SEARCH REPORT

| International application No. |
|---|
| **PCT/CN2023/116696** |

### A.    CLASSIFICATION OF SUBJECT MATTER

H04L 25/02(2006.01)i

According to International Patent Classification (IPC) or to both national classification and IPC

### B.    FIELDS SEARCHED

Minimum documentation searched (classification system followed by classification symbols)

IPC: H04L, H04W, G06F

Documentation searched other than minimum documentation to the extent that such documents are included in the fields searched

Electronic data base consulted during the international search (name of data base and, where practicable, search terms used)

CNTXT, ENTXT, ENTXTC, WPABS, CJFD, 3GPP: 物理广播信道, 盲检, 检测, 掩码, 解掩, 加扰, 解扰, 对数似然比, 合并序列, 全0, 全零, 解码, 译码, PBCH, blind detecting, masking, scrambling, LLR, sequence, MIB, SSB, cod+

### C.    DOCUMENTS CONSIDERED TO BE RELEVANT

| Category* | Citation of document, with indication, where appropriate, of the relevant passages | Relevant to claim No. |
|---|---|---|
| A | CN 114095118 A (SANECHIPS TECHNOLOGY CO., LTD.) 25 February 2022 (2022-02-25) entire document | 1-10 |
| A | CN 111817823 A (ASR TECHNOLOGY CO., LTD.) 23 October 2020 (2020-10-23) entire document | 1-10 |
| A | CN 111213330 A (APPLE INC.) 29 May 2020 (2020-05-29) entire document | 1-10 |
| A | US 2018375696 A1 (QUALCOMM INC.) 27 December 2018 (2018-12-27) entire document | 1-10 |
| A | WO 2022042473 A1 (ZTE CORP.) 03 March 2022 (2022-03-03) entire document | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 November 2023** | **22 November 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116696**

| Patent document cited in search report | | | Publication date (day/month/year) | Patent family member(s) | | | Publication date (day/month/year) |
|---|---|---|---|---|---|---|---|
| CN | 114095118 | A | 25 February 2022 | None | | | |
| CN | 111817823 | A | 23 October 2020 | None | | | |
| CN | 111213330 | A | 29 May 2020 | FI | 3659280 | T3 | 05 May 2023 |
| | | | | US | 2020213973 | A1 | 02 July 2020 |
| | | | | US | 11375475 | B2 | 28 June 2022 |
| | | | | EP | 4216467 | A1 | 26 July 2023 |
| | | | | WO | 2019023423 | A1 | 31 January 2019 |
| | | | | EP | 3659280 | A1 | 03 June 2020 |
| | | | | EP | 3659280 | A4 | 14 April 2021 |
| | | | | EP | 3659280 | B1 | 22 March 2023 |
| | | | | US | 2022330208 | A1 | 13 October 2022 |
| US | 2018375696 | A1 | 27 December 2018 | WO | 2019005624 | A1 | 03 January 2019 |
| | | | | TW | 201906342 | A | 01 February 2019 |
| WO | 2022042473 | A1 | 03 March 2022 | US | 2023275690 | A1 | 31 August 2023 |
| | | | | KR | 20230012598 | A | 26 January 2023 |
| | | | | JP | 2023527392 | A | 28 June 2023 |
| | | | | EP | 4195545 | A1 | 14 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211187621